# EUROPÄISCHE PATENTSCHRIFT

(11) **EP 0 635 212 B1**
(45) Veröffentlichungstag und Bekanntmachung des Hinweises auf die Patenterteilung: **23.12.1998**
(21) Anmeldenummer: 94110358.2
(22) Anmeldetag: 04.07.1994
(51) Int. Cl.: A22C 13/00

(54) **Flächen- oder schlauchförmige Folie auf Basis von Cellulosehydrat**
Sheet- or tube-like film based on cellulose hydrate
Films en feuille et films tubulaires à base d'hydrate de cellulose

(30) Priorität: 19.07.1993 DE 4324169; 11.10.1993 DE 4334561
(43) Veröffentlichungstag der Anmeldung: 25.01.1995
(73) Patentinhaber: HOECHST AKTIENGESELLSCHAFT, 65926 Frankfurt am Main (DE)
(72) Erfinder: Hammer, Klaus-Dieter, Dr., D-55120 Mainz (DE); Siebrecht, Manfred, Dr., D-65207 Wiesbaden-Naurod (DE); Mans, Leo, Dr., D-55291 Saulheim (DE); Krams, Theo, D-65197 Wiesbaden (DE); Winter, Hermann, D-65203 Wiesbaden (DE)
(74) Vertreter: Zounek, Nikolai, Dipl.-Ing.

(56) Entgegenhaltungen:
- EP-A- 0 460 348
- DE-A- 2 600 203
- DE-A- 3 409 746
- FR-A- 1 546 629
- US-A- 2 988 451

## Beschreibung

Die Erfindung bezieht sich auf eine flächen- oder schlauchförmige Folie auf Basis von Cellulosehydrat, ihre Verwendung als Nahrungsmittelhülle, bevorzugt als künstliche Wursthülle, sowie ein Verfahren zu ihrer Herstellung.

Flächenförmige, d. h. bahn-, blatt- oder schlauchförmige Folien auf Basis von Cellulosehydrat sind seit langem bekannt und werden gewöhnlich nach dem Viskoseverfahren hergestellt. Die allgemein als Viskoselösung bezeichnete alkalische Lösung von Cellulosexanthogenat wird durch eine ring- oder schlitzförmige Düse ausgepreßt und mit saurer Flüssigkeit als Cellulosehydrat-Gel koaguliert und zu Cellulosehydrat regeneriert. Durch die Zusammensetzung der Viskose und Einarbeiten von Zusatzstoffen lassen sich die Eigenschaften des schlauch- oder flächenförmigen Körpers aus regenerierter Cellulose variieren. Die unverstärkten Cellulosehydrat-Folien werden auch als Zellglasfolien bezeichnet und sind unter dem Warenzeichen ^{(R)}Cellophan bekannt. Sie werden auch als künstliche Wursthülle, im allgemeinen als sogenannter "Schmaldarm"_{,} eingesetzt. Bei der Herstellung faserverstärkter Körper wird ein schlauch- oder bahnförmiger Faserstoff auf einer oder beiden Oberflächen mit Viskoselösung beschichtet oder imprägniert und anschließend in entsprechender Weise mit Koagulations- und Regenerierflüssigkeit behandelt. Diese faserverstärkten Hüllen werden vor allem für die Herstellung von natur- und schimmelgereifter Dauerwurst eingesetzt. Es ist auch bekannt, bahnförmige Cellulosefolien nach ihrer Herstellung zu einem Schlauch zu biegen und die überlappenden Ränder unter Bildung einer Längsnaht miteinander zu verbinden oder die schlauchförmige Hülle durch Extrusion der Viskose durch eine Ringdüse nahtlos herzustellen.

Künstliche Wursthüllen auf der Basis von Cellulose erfüllen wichtige Funktionen bei der Herstellung, Reifung und Aufbewahrung der Wurstwaren. Sie müssen geschmeidig und ausreichend dehnfähig sein, um sie auch noch nach längeren Lagerzeiten problemlos mit Brät auf das gewünschte Kaliber befüllen zu können.

Es ist bekannt, diese Eigenschaften durch Zusatz von sekundären Weichmachern wie Glycerin zu verbessern. Da diese Weichmacher nicht chemisch, sondern nur durch zwischenmolekulare Kräfte an das Cellulosehydrat gebunden sind, werden sie beim Wässern der Hülle oder beim Brühen oder Kochen der Wurst herausgelöst. Die Folge ist ein besonders starkes Verspröden der weichmacherfreien, getrockneten Cellulosehülle nach der Verarbeitung. Diese Erscheinung ist auf eine im Cellulosematerial vor sich gehende Kristallisation zurückzuführen, wobei es im Cellulosegefüge zur Ausbildung von Wasserstoffbrückenbindungen zwischen den einzelnen Cellulosemolekülen und damit zu einer Annäherung und räumlichen Fixierung der Moleküle kommt. Durch diese Strukturveränderung wird die Hülle besonders stoßempfindlich und reißt sehr häufig beim ersten Anschneiden über die gesamte Länge ein. Alle bekannten Cellulosehydrathüllen sind wegen der geschilderten Neigung zum Verspröden bezüglich ihrer Geschmeidigkeit und Dehnfähigkeit verbesserungsbedürftig.

Weiterhin müssen Cellulosehydrathüllen eine möglichst niedrige Permeation aufweisen. Die Permeation ist entscheidend für das Reifeverhalten und Schimmelwachstum bei natur- und schimmelgereifter Dauerwurst. Die gleichmäßige Reifung dieser Wurstsorten verlangt eine sehr langsame Wasserabgabe aus der Wurstmasse während der ersten Tage. Bei Verwendung von üblichen faserverstärkten Cellulosehüllen muß deshalb eine sehr hohe und gleichbleibende relative Luftfeuchtigkeit der Umgebung vorherrschen, weshalb die Reifung von Rohwurst in Reifekammern erfolgt, in denen die relative Luftfeuchte in engen Grenzen geregelt ist.

Ein zu niedriger oder schwankender Feuchtegehalt der Umgebungsluft führt zu sogenannten Trockenrändern am Außenumfang der Wurst, insbesondere dann, wenn das Hüllenmaterial eine zu hohe Permeation aufweist und die Wurstmasse dadurch in den ersten Tagen der Reifung an der äußeren Oberfläche zu schnell abtrocknet. Der getrocknete Außenumfang der Wurst, der sogenannte Trockenrand, verhindert den weiteren Austritt von Feuchtigkeit aus dem Innern der Wurst, so daß sie nach der üblichen Reifezeit noch feucht ist. Außerdem haftet die Wursthülle nicht mehr ausreichend fest am Trockenrand, so daß sich unerwünschte Zwischenräume zwischen der Wurstmasse und der Hülle und Falten in der Hülle ausbilden.

Weiterhin ist die mechanische Festigkeit und die Zähigkeit der Cellulosehydrathüllen von entscheidender Bedeutung. Es darf beim Füllen der Hüllen, insbesondere bei hohen Füllgeschwindigkeiten, nicht zu Ausfällen durch Platzer kommen. Diese Nachteile treten beispielsweise bei den Kollagenfaserhüllen auf, die zwar bezüglich ihrer Permeation hervorragend sind, jedoch gleichzeitig völlig unzureichende mechanische Festigkeiten aufweisen. In gleicher Weise sind faserunverstärkte alginatmodifizierte Hüllen aufgrund ihrer mangelnden mechanischen Festigkeit nicht verwendbar, obgleich der Alginatzusatz bei faserverstärkten Hüllen sehr vorteilhafte Wirkungen hat.

Zusätzlich erwarten Wursthersteller, daß Cellulosehydrathüllen eine gute Kaliberkonstanz aufweisen, d. h. daß Würste, die aus ein und demselben Hüllenmaterial hergestellt werden, alle das gleiche Kaliber innerhalb enger Grenzen aufweisen. Diesbezüglich sind besonders faserunverstärkte Hüllen verbesserungsbedürftig.

Ein weiteres Qualitätsmerkmal von Cellulosehydrathüllen ist deren Feuchtebilanz. Zum einen soll das Material einen hohen Quellwert aufweisen, d. h. möglichst große Wassermengen aufnehmen. Zum anderen ist gleichzeitig eine verzögerte Wasserabgabe gewünscht, wobei die Fähigkeit zur Wasseraufnahme und -abgabe nicht mit der Permeation gleichzusetzen ist oder damit korreliert. Die Permeation ist ein Maß für die Wasserdurchlässigkeit der Hülle, während die Feuchtebilanz das Wasseraufnahme- und Wasserbindevermögen der Hülle charakterisiert. Eine gute Feuchtebilanz gewährleistet einen problemlosen Trocknungsprozeß, bei dem keine Versprödung oder Übertrocknung der Hülle auftritt.

Es ist demnach Aufgabe der Erfindung, die vorstehend beschriebenen Nachteile bekannter Cellulosehydrathüllen zu vermeiden. Insbesondere sollen die Cellulosehydrathüllen eine verbesserte, d. h. eine niedrigere, Permeation, insbesondere bei faserverstärkten Hüllen, und eine verbesserte Feuchtebilanz, d. h. eine hohe Wasseraufnahmefähigkeit und geringe Wasserabgabe, gegenüber herkömmlichen bekannten Cellulosehydrathüllen zeigen. Dabei sollen die Hüllen gleichzeitig eine gute Geschmeidigkeit und Dehnfähigkeit sowie gute mechanische Festigkeiten und Zähigkeit, insbesondere bei faserunverstärkten Hüllen, aufweisen und auch nach längeren Lagerzeiten nicht verspröden. Darüber hinaus ist eine gute Kaliberkonstanz sehr wünschenswert.

Gelöst wird die Aufgabe durch eine flächen- oder schlauchförmige Folie auf Basis von Cellulosehydrat, dadurch gekennzeichnet, daß sie zusätzlich
a) ein Homopolymer aus wiederkehrenden Einheiten der Formel I und
   mindestens ein Copolymer aus wiederkehrenden Einheiten der Formeln I und II und/oder I und III enthält, oder
b) ein Copolymer aus wiederkehrenden Einheiten der Formeln I und II und/oder I und III 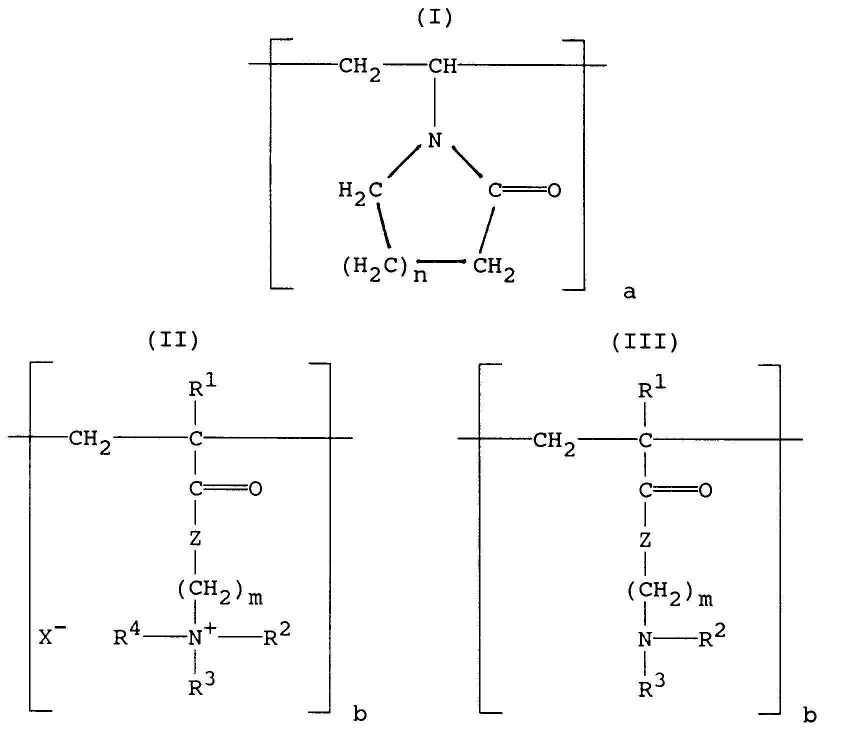 enthält, worin
   - n =: 1, 2 oder 3,
   - m =: 2, 3, 4, 5 oder 6,
   - a =: 20 bis 80 mol-%,
   - b =: 80 bis 20 mol-% und
   - a+b =: 100 mol-%,
   - R¹ =: H oder ein (C₁-C₆)Alkylrest,
   - R² bis R⁴: gleiche oder verschiedene (C₁-C₆)Alkylreste,
   - Z =: O oder N-R⁵, worin R⁵ = H oder (C₁-C₆)Alkylreste und
   - X =: Cl⁻, Br⁻, J⁻, F⁻, ½SO₄²⁻, HSO₄⁻, (C₁-C₆)Alkyl-O-SO₂-O⁻, (C₁-C₆)Alkyl-SO₂-O⁻.
bedeuten.

Die von Anspruch 1 abhängigen Ansprüche geben bevorzugte Ausführungsformen der Folie an. Teil der vorliegenden Erfindung ist ferner ein Verfahren zur Herstellung der Folie.

Die Folie ist blatt- oder bahnförmig. Ihre Dicke ist im Vergleich zu ihrer Länge und Breite relativ gering. Sie eignet sich besonders als Verpackungsfolie, z. B. für Lebensmittel, ist bevorzugt schlauchförmig und besteht aus einer gebogenen Bahn, deren längsaxiale Ränder mit einer längsaxialen Naht miteinander verbunden sind. Die schlauchförmige Folie kann auch nahtlos gefertigt werden. Sie wird gegebenenfalls mit einer Faserverstärkung als künstliche Nahrungsmittelhülle bei der Wurstherstellung eingesetzt.

Das Homopolymer ist bevorzugt Polyvinylpyrrolidon, d.h. ein Homopolymer mit wiederkehrenden Einheiten der Formel I, in denen n = 1 ist. Die Copolymere sind Polymerisate aus zwei Monomerarten A und B. Monomer A ist N-Vinylpyrrolidon und/oder N-Vinylpyridon und/oder N-Vinylcaprolactam. Monomer B besteht aus Estern von ungesättigten Carbonsäuren der Formel

R⁶-CO-O-R⁷ (IV)

worin
- R⁶: ein einfach ungesättigter verzweigter oder unverzweigter Alkylrest der Formel CₙH₂ₙ₋₁ ist mit n = 2, 3 oder 4, und
- R⁷: ein trialkylsubstituierter Ammoniumrest der Formel 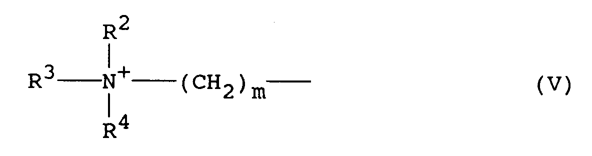
oder ein alkylsubstituierten Aminrest der Formel 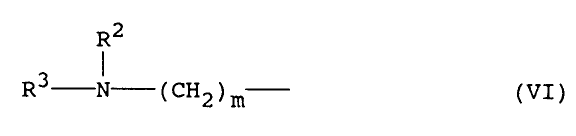 worin R², R³, R⁴ und m jeweils die vorstehende Bedeutung haben,
oder ungesättigte Carbonsäureamide der Formel 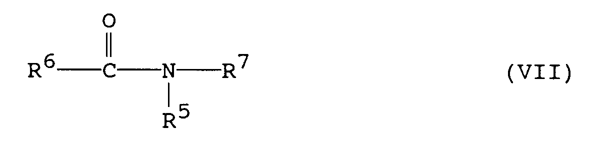 worin R⁵, R⁶ und R⁷ die vorstehende Bedeutung haben.

Bevorzugte Monomere B sind ungesättigte Carbonsäuren der Formel IV und ungesättigte Carbonsäureamide der Formel VII, in denen jeweils R⁶ Vinyl, 1-Methyl-vinyl, Propenyl oder Allyl bedeutet.

Somit sind als Copolymere solche Verbindungen der Formeln I und II und/oder I und III bevorzugt, in denen
- n =: 1,
- m =: 2, 3 oder 4,
- a =: 30 bis 70 mol-% und
- b =: 70 bis 30 mol-% und
- a+b =: 100 mol-%,
- Z =: O oder NH,
- X =: HSO₄⁻, (C₁-C₆)Alkyl-O-SO₂-O⁻ oder (C₁-C₆)Alkyl-SO₂-O⁻ und
- R¹ =: H oder CH₃,
- R² bis R⁴: gleich oder verschieden sind und CH₃ oder C₂H₅
bedeuten.

Die Copolymere werden durch Polymerisation der vor-stehend beschriebenen Monomere A mit den vorstehend beschriebenen Monomeren B hergestellt. Derartige Copolymere werden unter der Bezeichnung ^{(R)}Gafquat als wäßrige Lösungen von GAF Corp. vertrieben.

Die Homo- und Copolymere haben im allgemeinen ein mittleres Molekulargewicht M_{w} von 50 000 bis 2 000 000, bevorzugt von 100 000 bis 1 500 000, besonders bevorzugt von 500 000 bis 1 500 000. Der pH-Wert der Polymerlösungen in wäßrigen Lösungen beträgt 4 bis 8. Wäßrige Lösungen haben im allgemeinen eine Viskosität von 10 000 bis 100 000 mPas (bei 25 °C Brookfield RVF oder RVT, 20 RPM).

Als ganz besonders vorteilhaft haben sich Copolymere von N-Vinylpyrrolidon und Ethyl-(2-methacryloyloxy-ethyl)-dimethylammonium-ethylsulfat sowie quaternisierte Copolymere von N-Vinylpyrrolidon und (3-Methacryloylaminopropyl)-trimethylammoniumchlorid erwiesen.

Die Homo- und/oder Copolymere werden im Spinnkessel oder vor der Spinndüse mit der alkalischen Viskoselösung gemischt. Die Lösung wird dann in üblicher Weise durch eine Spinndüse extrudiert, gefällt und regeneriert. Sie ist auch bei einer hohen Homo- oder Copolymerkonzentration noch homogen, wobei überraschenderweise die Fällung und Regeneration des Cellulosehydrats nicht beeinträchtigt wird.

Der Anteil an den genannten Homo- und/oder Copolymeren in der Cellulosehydrathülle kann innerhalb weiter Grenzen variieren. Im allgemeinen beträgt er in den nicht faserverstärkten Hüllen 0,1 bis 60 Gew.-%, bevorzugt 0,5 bis 30 Gew.-%, besonders bevorzugt 0,5 bis 5 Gew.-%, jeweils bezogen auf das Gewicht der trockenen Cellulose. Er richtet sich nach dem Hüllentyp, nach den gewünschten Hülleneigenschaften sowie gegebenenfalls nach der Menge an sekundärem Weichmacher, der zusätzlich in der nicht faserverstärkten Hülle enthalten sein kann.

In den faserverstärkten Cellulosehydrathüllen kann der Anteil an Homo- und/oder Copolymeren auch höher sein. Hier beträgt er 0,1 bis 100 Gew.-%, bevorzugt 1 bis 50 Gew.-%, besonders bevorzugt 2 bis 30 Gew.-%, bezogen auf das Gewicht der Cellulose. Überrascherweise sind die Hülleneigenschaften durch die Einarbeitung des Homo- und/oder Copolymers so stark verbessert, daß man auf den Zusatz von Glycerin ganz verzichten kann.

Durch den Zusatz von Homo- und/oder Copolymer wird das Wasseraufnahmevermögen des Materials, gemessen als Quellwert, deutlich erhöht. In der Tabelle 1 ist die Abhängigkeit des Quellwertes einer schlauchförmigen, faserverstärkten Cellulosehülle (Kaliber 60 mm) vom Copolymergehalt dargestellt.

**Tabelle 1**

| Copolymergehalt (Gew.-%) | Quellwert | |
|---|---|---|
| | 20 Gew.-% Glycerin | ohne Glycerinzusatz |
| 0 | 120 - 130 | 70 - 90 |
| 5 | 130 - 140 | 100 - 110 |
| 10 | 140 - 160 | 110 - 120 |
| 15 | 160 - 190 | 120 - 130 |
| 18 | 190 - 200 | 130 - 140 |

Wie aus der Tabelle 1 zu ersehen ist, wird mit einem Copolymergehalt von 10 bis 15 % (ohne Zusatz von Glycerin) etwa der Quellwert des üblichen Cellulosematerials mit einem Glyceringehalt von 20 Gew.-%, bezogen auf die Cellulose, erreicht.

Überraschenderweise verbessert die Einarbeitung des Polymers neben dem Quellwert, d. h. der Wasseraufnahmefähigkeit der Hülle, gleichzeitig auch die Permeation der faserverstärkten Hüllen. Diese Verbesserung beeinträchtigt jedoch nicht die mechanische Festigkeit des Materials. Dadurch ist es möglich, die Copolymere auch in größeren Mengen einzuarbeiten und dadurch die Permeation wesentlich stärker als bei alginatmodifizierten Hüllen zu senken. Die Tabelle 2 zeigt einen Vergleich der Permeation von verschieden modifizierten Cellulosehydrathüllen und Kollagenfaserhüllen.

**Tabelle 2**

| Permeation verschieden modifizierter Faserdärme | | | | |
|---|---|---|---|---|
| Cellulosehydrat Gew.-% | Alginat Gew.-% | Glycerin Gew.-% | Polymer Gew.-% | Permeation lm⁻²·d⁻¹ |
| 85 | 5 | 10 | - | 100 - 130 |
| 95 | 5 | - | - | 60 - 70 |
| 80 | - | - | 20 | 40 |
| Kollagenfaserhülle | - | - | - | 10 - 12 |

Die erfindungsgemäßen Hüllen ähneln damit den Kollagenhüllen mehr als die Hüllen auf Cellulosehydratbasis, die allein alginatmodifiziert sind. Bei der Reifung von Rohwurst ist die Hülle während der kritischen Reifephase der ersten Tage aufgrund ihres höheren Feuchtigkeitsgehaltes und durch die niedrige Permeation in der Lage, schwankende Reifebedingungen weitgehend zu kompensieren. Der Aufwand für die Einhaltung der Reifebedingungen kann wesentlich reduziert werden. Die erfindungsgemäße Hülle auf Cellulosehydratbasis stellt - wie Kollagenhüllen - während der Lagerung der Wurst seltener vom Wurstbrät ab, wenn dieses durch Trocknung schrumpft. Dadurch wird verhindert, daß sich zwischen der Hülle und der getrockneten Wurstmasse Zwischenräume ausbilden, die der Hülle ein faltiges Aussehen verleihen.

Zusätzlich zeichnet sich die erfindungsgemäße, faserverstärkte Cellulosehydrathülle durch eine verzögerte Abgabe von Wasser aus. In der Tabelle 3 sind die entsprechenden Werte für die Feuchteabgabe eines 10 Gew.-% Copolymer enthaltenden Faserdarms bei 55 % relativer Luftfeuchte und 23 °C im Vergleich zu einem Faserdarm ohne Zusatz zusammengestellt.

| | | |
|---|---|---|
| | Tabelle 3 | |

| Zeit | Feuchteabgabe in % | |
|---|---|---|
| | 90 Gew.-% Cellulosehydrat | 100 Gew.-% Cellulosehydrat |
| h | 10 Gew.-% Copolymer | |
| 0,5 | 14,3 | 18,0 |
| 1,0 | 22,7 | 25,9 |
| 2,0 | 38,0 | 40,0 |
| 3,0 | 45,0 | 45,3 |

Dadurch bleibt die Hülle auch nach der Verarbeitung und nach längeren Lagerzeiten der Wurst geschmeidig. Sie wird nicht stoßanfällig und reißt beim Anschneiden nicht so leicht ein wie herkömmliche Hüllen. Weiterhin wirkt sich die verzögerte Wasserabgabe positiv auf die Trocknung des Cellulosehydratschlauchs bei dessen Herstellung aus. Die Trocknung wird gedämpft und Übertrocknung vermieden.

Gegebenenfalls können die faserverstärkten Hüllen zusätzlich Alginsäure oder Alginat enthalten. Alginsäuren sind bekanntlich Carboxylgruppen enthaltende pflanzliche Polysaccharide. Alginate sind die Salze der Alginsäuren, vorzugsweise die Alkali-, Ammonium- und Erdalkalisalze. Die Alginsäure wird gewöhnlich als Natriumalginatlösung durch Extraktion von Braunalgen mit Hilfe von Sodalösung gewonnen. Alginate bzw. Alginsäuren bestehen aus 1,4-beta-glykosidisch verknüpften **D**-Mannuronsäureeinheiten mit Einschüben von 1,4-alpha-glykosidisch verknüpften **L**-Guluronsäureeinheiten. Sie sind ähnlich wie Cellulose aus langen unverzweigten Kettenmolekülen aufgebaut. Durch die große Anzahl von Carboxylgruppen sind die Alginate bzw. Alginsäuren außerordentlich hydrophil und in der Lage, das 200- bis 300fache ihres Gewichts an Wasser zu binden.

Cellulosehüllen mit Alginsäure und/oder Alginat sind an sich bekannt und werden in der EP-A 0 460 348 beschrieben. Die Kombination von Alginsäure und/oder Alginat und Homo- und/oder Copolymer bietet für faserverstärkte Hüllen überraschende Vorteile, insbesondere werden die Hülleneigenschaften noch weiter in Richtung der Kollagenhüllen verändert. Die Hüllen weisen eine noch niedrigere Permeation auf und sind in der gewünschten Weise zäh, geschmeidig und fest, wobei sie aber nicht den papierartigen, knittrigen Charakter aufweisen, wie er sonst bei nur alginathaltigen Hüllen, insbesondere bei niedrigen Feuchtegehalten, vorliegt.

Der Anteil der Alginsäure bzw. des Alginats in der Folie kann in weiten Bereichen schwanken und beträgt 1 bis 50 Gew.-%, vorzugsweise 1 bis 30 Gew.-%, insbesondere 5 bis 20 Gew.-%, bezogen auf das Gewicht der Cellulose. In den alginsäure- bzw. alginathaltigen Folien liegt der Gehalt an den genannten Homo- und/oder Copolymeren zwischen 0,1 und 60 Gew.-%, vorzugsweise 0,1 und 10 Gew.-%, bezogen auf das Gewicht der Cellulose. Selbst geringe Mengen von 0,1 bis 2 Gew.-% Homo- und/oder Copolymer wirken sich in Verbindung mit Alginsäure und/oder Alginat günstig aus, insbesondere auf die Permeation, den Quellwert und das Trocknungsverhalten. Beispielsweise beträgt die Permeation einer faserverstärkten Cellulosehydrathülle mit 5 Gew.-% Alginsäure und 0,5 bis 2 Gew.-% Homo- und/oder Copolymer zwischen 50 und 60 l/m²d, der Quellwert beträgt 130 bis 140 %, der Platzdruck liegt 10 % über den üblichen Werten, und beim Trocknen tritt keine Versprödung des Materials mehr auf. Diese Hülle ist gegenüber der nur mit Alginat modifizierten wesentlich geschmeidiger, zäher und fester. Bei höheren Gehalten an Alginsäure und/oder Alginat und den genannten Homo- und/oder Copolymeren, beispielsweise von 10 Gew.-% Alginat und 10 Gew.-% Homo- und/oder Copolymer, sinkt die Permeation weiter auf 30 bis 35 l/m²d, der Quellwert beträgt 140 bis 150 %, und die mechanischen Festigkeiten der Hülle bleiben voll erhalten.

Die vorstehenden Angaben in Gew.-% beziehen sich auf das Gewicht an Cellulosehydrat.

In einer weiteren Ausführungsform der Erfindung werden Cellulosehydrathüllen ohne Faserverstärkung durch den Zusatz der genannten Homo- und/oder Copolymere modifiziert. Sie können außerdem einen sekundären Weichmacher, wie Glycerin enthalten, wobei dessen Anteil im allgemeinen gegenüber nicht modifizierten Cellulosehydrathüllen ohne Faserverstärkung gesenkt werden kann. Der Glyceringehalt liegt im Bereich von 8 bis 12 Gew.-%, bevorzugt von 10 bis 11 Gew.-%.

Auch bei diesen unverstärkten Cellulosehydrathüllen verbessert das eingearbeitete Homo- und/oder Copolymer den Quellwert und die Feuchtabgabe signifikant. Die verbesserte Permeation hingegen spielt bei diesem Hüllentyp eine untergeordnete Rolle, denn dieser Typ wird als so-genannter Schmaldarm im allgemeinen nicht für natur- oder schimmelgereifte Rohwürste verwendet.

Die verbesserte Feuchtebilanz der Cellulosehülle ermöglicht beispielsweise durch die Einarbeitung von nur 0,5 bis 2 Gew.-% Copolymer eine Halbierung des üblichen Glyceringehalts von 20 bis 22 Gew.-% auf 10 bis 11 Gew.-%. Bei höheren Konzentrationen, insbesondere ab 5 Gew.-%, kann auf den sekundären Weichmacher sogar bei diesen Hüllentypen ohne Faserverstärkung verzichtet werden.

Die erfindungsgemäßen, nicht-faserverstärkten Hüllen sind sowohl glycerinfrei als auch mit reduziertem Glyceringehalt sehr geschmeidig und lassen sich problemlos trocknen, ohne daß eine nachteilige Versprödung oder Übertrocknung auftritt.

Die Reduzierung der einzusetzenden Glycerinmengen bei der Wursthüllenherstellung ist auch im Hinblick auf die mit dem Glycerin verbundenen Emissionsprobleme bei der Produktion und den Migrationsproblemen bei der Verarbeitung außerordentlich vorteilhaft.

Weiterhin sind die reinen Cellulosehydrathüllen bezüglich ihrer mechanischen Eigenschaften überraschend verbessert. Dieses Ergebnis ist nach den Erfahrungen, die mit Alginsäure und/oder Alginat als Ersatz für sekundären Weichmacher bei faserunverstärkten Hüllen gesammelt wurden, besonders erstaunlich. Alginsäure lockert die Struktur des Cellulosehydrats auf und wirkt so dem eingangs beschriebenen Kristallisationsprozeß entgegen. Dadurch werden der Quellwert und die Hüllengeschmeidigkeit wesentlich verbessert. Gleichzeitig verursacht aber die Strukturauflockerung durch das Alginat eine derartige Verschlechterung der mechanischen Festigkeit, daß alginathaltige Hüllen ohne Faserverstärkung nicht zu handhaben sind. Überraschenderweise wirkt die Einarbeitung der Polymere in die Cellulosehydrathülle verbessernd auf den Quellwert und die Feuchtebilanz, wobei überraschenderweise gleichzeitig auch die mechanischen Eigenschaften verbessert sind. Dies zeigt sich z. B. an einem verbesserten Platzdruck, der 8 bis 10 % über dem Sollwert des Standardmaterials liegt, und die Kaliberschwankungen sind wesentlich geringer.

Als Wursthülle wird die Folie in dem üblichen Kaliber von 18 bis 200, insbesondere 40 bis 135 mm verwendet. Die faserverstärkte Folie hat im bevorzugten Kaliberbereich von 40 bis 135 mm gewöhnlich ein Flächengewicht von 85 bis 120 g/m². Die nichtverstärkte Folie wird bevorzugt im Kaliberbereich von 30 bis 50 mit einem Flächengewicht von 40 bis 60 g/m² eingesetzt. Bei zusätzlich enthaltenen sekundären Weichmachern, wie Glycerin, erhöht sich das Flächengewicht in Abhängigkeit von der Menge an Weichmacher entsprechend.

Die Hülle wird in Abschnitten oder Rollen mit einem Wassergehalt von 10 Gew.-% gelagert. Der Wassergehalt der Raupen beträgt 14 bis 20 Gew.-%. Für die wässerungsfreien Raupen wird der Wassergehalt auf 23 bis 30 Gew.-% erhöht. Alle vorstehenden Angaben in Gew.-% beziehen sich auf das Gesamtgewicht der Hülle.

Die Herstellung der Folie erfolgt in an sich bekannter Weise nach dem Viskoseverfahren. Das/die Copolymer/en und gegebenenfalls die Alginsäure bzw. das Alginat wird/werden in wäßriger Lösung in seiner/ihrer wasserlöslichen Form als Natriumsalz mit der alkalischen Viskoselösung im gewünschten Gewichtsverhältnis homogen gemischt, und zwar entweder im Spinnkessel oder kurz vor der Spinndüse. Die Mischung aus Viskose und Copolymer wird bahn- oder schlauchförmig durch eine Spinndüse extrudiert. Bei der Herstellung von Folien mit einer Faserverstärkung wird in an sich bekannter Weise eine Faserbahn, die gegebenenfalls zu einem Schlauch gebogen wird, mit der Mischung aus üblicher alkalischer Viskoselösung und Copolymeren getränkt und beschichtet. Anschließend wird durch Einwirkung einer sauren Spinnflüssigkeit, die gewöhnlich Schwefelsäure enthält, die Viskose ausgefällt. Die Fällflüssigkeit befindet sich beispielsweise in einem Bad, das die extrudierte Viskoselösung bzw. die viskosierte, gegebenenfalls schlauchförmig gebogene, Faserbahn durchläuft, oder sie wird als Film durch eine Düse auf die extrudierte Viskose bzw. auf die viskosierte Faserbahn aufgebracht. Nach dem Durchlaufen der bei der Herstellung von Folien aus Cellulosehydrat üblichen Regenerier- und Waschbäder wird die Folie getrocknet. Zum Trocknen auf den üblichen Feuchtigkeitsgehalt (8 bis 10 %) von Cellulosehüllen ist wegen des hohen Wasserbindevermögens der erfindungsgemäßen Hülle ein höherer Energieaufwand erforderlich.

Die Folie wird vor dem Trocknen gegebenenfalls durch ein Bad mit einem sekundären Weichmacher, z. B. eine wäßrige Glycerinlösung, geführt. Bei Hüllen ohne Faserverstärkung ist der Zusatz eines Weichmachers von Vorteil. Ab einem Homo- oder Copolvmergehalt von 5 Gew.-% besitzt die Folie bereits die zur Verarbeitung erforderliche Geschmeidigkeit, so daß kein Zusatz von Glycerin mehr notwendig ist.

Soll die erfindungsgemäße Folie als Nahrungsmittelhülle, insbesondere als Wursthülle, verwendet werden, ist sie gegebenenfalls auf der Innen- und/oder Außenseite beschichtet. Diese Beschichtung kann eine Barriereschicht gegenüber Luftsauerstoff und Wasserdampf sein. Eine Innenbeschichtung trägt zur Verbesserung des Schälverhaltens und/oder zur Verbesserung der Haftung zwischen Wurstmasse und Hülleninnenwand bei. Die Hülle kann auch eine fungicide Außenbeschichtung aufweisen. Gegebenenfalls enthält sie übliche Farbpigmente, z. B. Ruß oder TiO₂. Als schlauchförmige Verpackungshülle wird sie, beispielsweise in geraffter Form, als einseitig abgebundener Abschnitt oder, in flachgelegter Form, als Rolle in den Handel gebracht.

Die Erfindung wird durch die nachfolgenden Beispiele näher erläutert. Soweit nicht anders angegeben sind alle Prozentangaben Gewichtsprozente.

### Beispiel 1

Hanffaserpapier (Flächengewicht 17 g/m²) wird zu einem Schlauch (Kaliber 55 mm) geformt. Die Schlauchinnen- und -außenseite wird mit einem Gemisch aus 172 l/h alkalischer Viskoselösung und 24,8 l/h einer 10%igen wäßrigen Lösung eines Copolymers mit Einheiten der Formeln I und III, worin n = 1, m = 2, Z = O, R² und R³ = CH₃, R⁴ = C₂H₅ und X = C₂H₅-O-SO₂-O⁻ bedeuten, imprägniert und beschichtet. Die Verbindung ist unter dem Handelsnamen ^{(R)}Gafquat 755N bei GAF Chem. Corp. erhältlich. Es ist ein quarterniertes Copolymer aus N-Vinylpyrrolidon und Ethyl-(2-methacryloyloxy-ethyl)-dimethylammonium-ethylsulfat. Der viskosierte Schlauch wird durch die üblichen Fäll-, Regenerier- und Waschbäder geführt. Das für Celluloseschläuche übliche Weichmacherbad entfällt. Der glycerinfreie Gelschlauch wird mit Stützluft aufgeblasen und auf einen Feuchtegehalt von 12 bis 14 %, bezogen auf das Gewicht der Cellulose, getrocknet. Das fertige Produkt enthält 20 Gew.-% des Copolymers, bezogen auf das Gewicht der Cellulose.

### Beispiel 2

Hanffaserpapier (Flächengewicht 17 g/m²) wird zu einem Schlauch (Kaliber 65 mm) geformt. Die Schlauchaußenseite wird mit einem Gemisch von 151 l/h alkalischer Viskose und 19 l/h einer Mischung aus 13,6 l/h einer 4%igen Natriumalginatlösung und 5,4 l/h einer 10%igen Copolymerlösung des Beispiels 1 beschichtet. Der viskosierte Schlauch wird mit saurer Fällflüssigkeit behandelt und durch die üblichen Regenerierbäder geführt. Vor dem Einlauf in den Trockner wird er auf seiner Innenseite mit einer Haftimprägnierung versehen. Der mit Stützluft aufgeblasene Schlauch wird auf einen Feuchtigkeitsgehalt von 12 bis 14 %, bezogen auf das Gewicht der Cellulose, getrocknet. Durch die Hitzeeinwirkung wird das Casein/Glyoxal ausgehärtet und geht in seine wasserunlösliche Form über. Eine Weichmacherbehandlung wird nicht vorgesehen. Das fertige Produkt enthält 5 Gew.-% Copolymer und 5 Gew.-% Alginat, jeweils bezogen auf das Gewicht der Cellulose.

### Beispiel 3

Ein Gemisch aus 111,7 l/h alkalischer Viskose und 8,04 l/h einer 10%igen Copolymerlösung des Beispiels 1 wird durch eine Schmaldarmdüse mit einem Durchmesser von 40 mm in eine saure Fällflüssigkeit von üblicher Zusammensetzung extrudiert und anschließend durch die üblichen Bäder zum Regenerieren der Cellulose und Waschbäder geführt. Das übliche Weichmacherbad entfällt. Im Trockner wird der Gelschlauch aufgeblasen und bis auf einen Feuchtegehalt von 10 bis 12 Gew.-%, bezogen auf das Gewicht der Cellulose, getrocknet.

Das fertige Produkt hat einen Copolymergehalt von 10 Gew.-%, bezogen auf die Cellulose.

Das sehr stabile und geschmeidige Material läßt sich problemlos aufwickeln, maschinell abbinden und raffen. Die auftretenden Kaliberschwankungen sind wesentlich geringer als bei glycerinhaltigem Standardmaterial.

### Beispiel 4

Ein Gemisch aus 117 l/h alkalischer Viskose und 1,68 l/h einer 5%igen Copolymerlösung des Beispiels 1 wird durch eine Schmaldarmdüse mit einem Durchmesser von 40 mm in eine saure Fällflüssigkeit von üblicher Zusammensetzung extrudiert und anschließend durch die üblichen Bäder zum Regenerieren der Cellulose, Waschbäder und ein Weichmacherbad geführt. Im Trockner wird der Gelschlauch aufgeblasen und bis auf einen Feuchtegehalt von 10 bis 12 Gew.-%, bezogen auf das Gewicht der Cellulose, getrocknet. Das fertige Produkt hat einen Glyceringehalt von 10 bis 11 Gew.-% und einen Copolymergehalt von 1 Gew.-%, jeweils bezogen auf die Cellulose.

Das sehr stabile und geschmeidige Material läßt sich problemlos aufwickeln, maschinell abbinden und raffen. Die auftretenden Kaliberschwankungen sind wesentlich geringer als bei glycerinhaltigem Standardmaterial.

Die Eigenschaften der Hüllen gemäß den Beispielen und Vergleichsbeispielen werden in der nachstehenden Tabelle 4 zusammengefaßt:

**Tabelle 4**

| Beispiele | Flächengewicht g/m² | Platzdruck kPa (Sollwert) | Quellwert % | Permeation l/m²d² | statische Dehnung mm (Toleranz) |
|---|---|---|---|---|---|
| 1 FD | 80 | 120 | 130 | 38 | 55,8 |
| K 50 | | (105) | | | (54,4-56.4) |
| 2 FD | 76 | 71 | 140 | 50 | 70,5 |
| K 65 | | (66,3) | | | (68,1-71,1) |
| 3 CD | 42 | 37 | 101 | 60 | 45 |
| K 40 | | (30) | | | (43-47) |
| 4 CD | 48 | 34 | 120 | 75 | 44,5 |
| K 40 | | (30) | | | (43-47) |
| FD = faserverstärkte Hülle (Faserdarm) CD = nicht faserverstärkte Hülle (Cellulosedarm) K = Kaliber | | | | | |

## Patentansprüche

1. Flächen- oder schlauchförmige Folie auf Basis von Cellulosehydrat, dadurch gekennzeichnet, daß sie zusätzlich
a) ein Homopolymer aus wiederkehrenden Einheiten der Formel I und
ein Copolymer aus wiederkehrenden Einheiten der Formeln I und II und/oder I und III enthält, oder
b) ein Copolymer aus wiederkehrenden Einheiten der Formeln I und II und/oder I und III 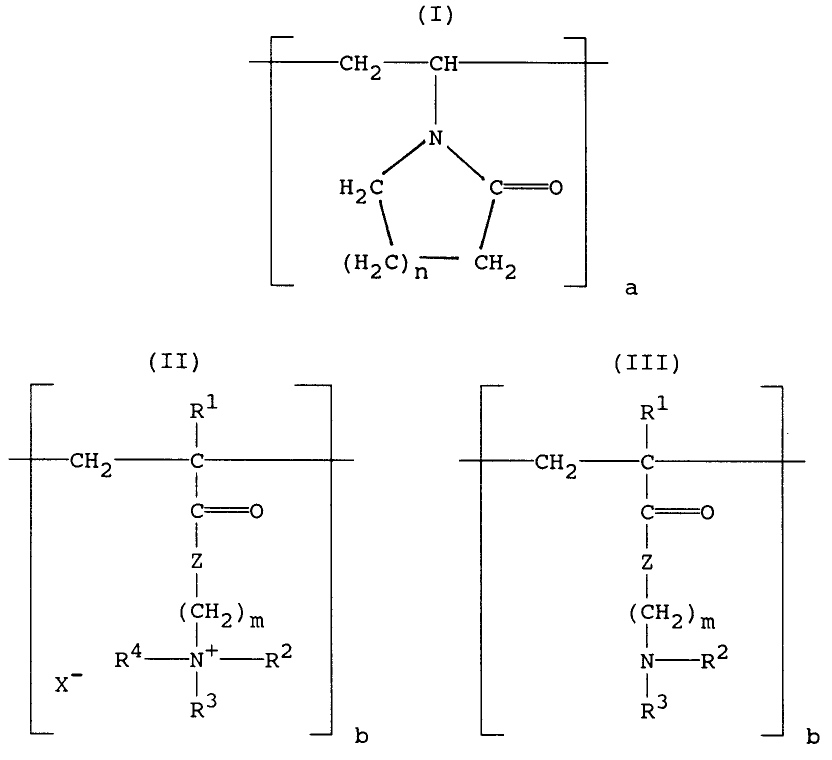 enthält, worin
n = 1, 2 oder 3,
m = 2, 3, 4, 5 oder 6,
a = 20 bis 80 mol-%,
b = 80 bis 20 mol-% und
a+b = 100 mol-%,
R¹ = H oder ein (C₁-C₆)Alkylrest,
R² bis R⁴ gleiche oder verschiedene (C₁-c₆)Alkylreste,
Z = O oder N-R⁵, worin R⁵ = H oder (C₁-C₆)Alkylreste und
X = Cl⁻, Br⁻, J⁻, F⁻, ½SO₄²⁻, HSO₄⁻, (C₁-C₆)Alkyl-O-SO₂-O⁻, (C₁-C₆)-Alkyl-SO₂-O⁻.
bedeuten.

2. Folie nach Anspruch 1, dadurch gekennzeichnet, daß sie ein Copolymer aus wiederkehrenden Einheiten der Formeln I und II und/oder ein Copolymer aus wiederkehrenden Einheiten der Formeln I und III enthält, worin
n = 1,
m = 2, 3 oder 4,
a = 30 bis 70 mol-% und
b = 70 bis 30 mol-% und
a+b = 100 mol-%,
Z = O oder NH,
X = HSO₄⁻, (C₁-C₆)Alkyl-O-SO₂-O⁻ oder (C₁-C₆)Alkyl-SO₂-O⁻ und
R¹ = H oder CH₃,
R² bis R⁴ gleich oder verschieden sind und CH₃ oder C₂H₅
bedeuten.

3. Folie nach Anspruch 1, dadurch gekennzeichnet, daß das Homo- oder Copolymer ein mittleres Molekulargewicht M_{w} von 50 000 bis 2 000 000, bevorzugt 100 000 bis 1 500 000, besonders bevorzugt 500 000 bis 1 500 000, hat.

4. Flächen- oder schlauchförmige Folie nach einem oder mehreren der Ansprüche 1 bis 3, dadurch gekennzeichnet, daß das Homo- und/oder Copolymer in einer Menge von 0,1 bis 60 Gew.-%, bevorzugt 0,5 bis 30 Gew.-%, besonders bevorzugt 0,5 bis 5 Gew.-%, jeweils bezogen auf das Gewicht der Cellulose, enthalten ist/sind.

5. Folie nach einem oder mehreren der Ansprüche 1 bis 4, dadurch gekennzeichnet, daß die Folie auf Basis von Cellulosehydrat zusätzlich Alginsäure und/oder Alginat enthält.

6. Folie nach einem oder mehreren der Ansprüche 1 bis 5, dadurch gekennzeichnet, daß die Folie auf Basis von Cellulosehydrat Alginsäure und/oder Alginat in einer Menge von 1 bis 50 Gew.-%, bezogen auf das Gewicht der Cellulose, enthält.

7. Folie nach einem oder mehreren der Ansprüche 1 bis 6, dadurch gekennzeichnet, daß die Folie auf Basis von Cellulosehydrat eine Faserverstärkung enthält.

8. Folie nach einem oder mehreren der Ansprüche 1 bis 7, dadurch gekennzeichnet, daß die Folie auf Basis von Cellulosehydrat einen Feuchtegehalt von 10 bis 30 Gew.-%, bezogen auf das Gewicht der Cellulose, aufweist.

9. Folie nach einem oder mehreren der Ansprüche 1 bis 8, dadurch gekennzeichnet, daß die Folie auf Basis von Cellulosehydrat eine Permeation von höchstens 70 l/m²d aufweist.

10. Verfahren zur Herstellung einer Folie nach einem oder mehreren der Ansprüche 1 bis 9, dadurch gekennzeichnet, daß man die Viskoselösung vor der Extrusion mit einer wäßrigen Lösung der im Anspruch 1 genannten Homo- und/oder Copolymeren versetzt, die entstandene homogene Lösung extrudiert, durch die saure Fällflüssigkeit koaguliert und regeneriert.

11. Verwendung der Folie nach einem oder mehreren der Ansprüche 1 bis 10 als Verpackungsmaterial, bevorzugt für Nahrungsmittel, besonders bevorzugt für Wurstwaren.

## Claims

1. A cellulose hydrate-based flat or tubular film which additionally contains
a) a homopolymer of repeating units of the formula I and a copolymer of repeating units of the formulae I and II and/or I and III, or
b) a copolymer of repeating units of the formulae I and II and/or I and III 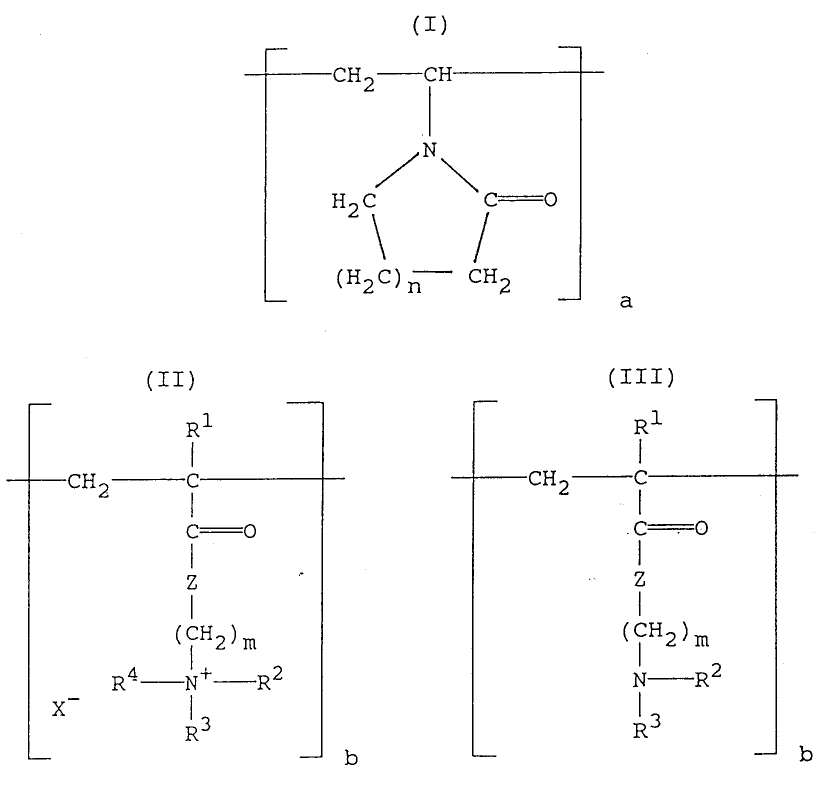 in which
n = 1, 2 or 3,
m = 2, 3, 4, 5 or 6,
a = about 20 to 100 mol%,
b = about 80 to 20 mol% and
a + b = 100 mol%,
R¹ is H or a (C₁-C₆)-alkyl radical,
R² to R⁴ are identical or different and are (C₁-C₆)-alkyl radicals,
Z = O or N-R⁵, in which R⁵ = H or (C₁-C₆)-alkyl radicals and
X = Cl⁻, Br⁻, I⁻, F⁻, ½SO₄²⁻, HSO₄⁻, (C₁-C₆)-alkyl-O-SO₂-O⁻, (C₁-C₆)-alkyl-SO₂-O⁻.

2. The film as claimed in claim 1, wherein it contains a copolymer of repeating units of the formulae I and II and/or a copolymer of repeating units of the formulae I and III, in which
n = 1,
m = 2, 3 or 4,
a = 30 to 70 mol % and
b = 70 to 30 mol % and
a + b = 100 mol %,
Z = O or NH,
X = HSO₄⁻, (C₁-C₆)-alkyl-O-SO₂-O⁻ or (C₁-C₆)-alkyl-SO₂-O⁻ and
R¹ is H or CH₃,
R² to R⁴ are identical or different and are CH₃ or C₂H₅.

3. The film as claimed in claim 1, wherein the homo- or copolymer has a mean molecular weight M_{w} of 50,000 to 2,000,000, preferably of 100,000 to 1,500,000, particularly preferably of 500,000 to 1,500,000.

4. The flat or tubular film as claimed in one or more of claims 1 to 3, wherein the homo- and/or copolymer is/are contained in an amount of 0.1 to 60 % by weight, preferably 0.5 to 30 % by weight, particularly preferably 0.5 to 5 % by weight, in each case based on the weight of cellulose.

5. The film as claimed in one or more of claims 1 to 4, wherein the cellulose hydrate-based film additionally contains alginic acid and/or alginate.

6. The film as claimed in one or more of claims 1 to 5, wherein the cellulose hydrate-based film contains alginic acid and/or alginate in an amount of 1 to 50 % by weight, based on the weight of cellulose.

7. The film as claimed in one or more of claims 1 to 6, wherein the cellulose hydrate-based film contains a fiber reinforcement.

8. The film as claimed in one or more of claims 1 to 7, wherein the cellulose hydrate-based film has a moisture content of 10 to 30 % by weight, based on the weight of cellulose.

9. The film as claimed in one or more of claims 1 to 8, wherein the cellulose hydrate-based film has a permeation of at most 70 l/m²d.

10. A process for the production of a film as claimed in one or more of claims 1 to 9, which comprises adding to the viscose solution, before the extrusion, an agueous solution of the homo- and/or copolymer mentioned in claim 1, extruding the resulting homogeneous solution, coagulating it by the acidic precipitation liquid and regenerating it.

11. Use of the film as claimed in one or more of claims 1 to 10 as a packaging material, preferably for food, particularly preferably for sausage products.

## Revendications

1. Pellicule plane ou en forme de boyau, à base d'hydrate de cellulose, caractérisée en ce qu'elle contient en outre
a) un homopolymère de motifs répétitifs de formule I et un copolymère de motifs répétitifs de formules I et II et/ou I et III, ou
b) un copolymère de motifs répétitifs de formules I et II et/ou I et III 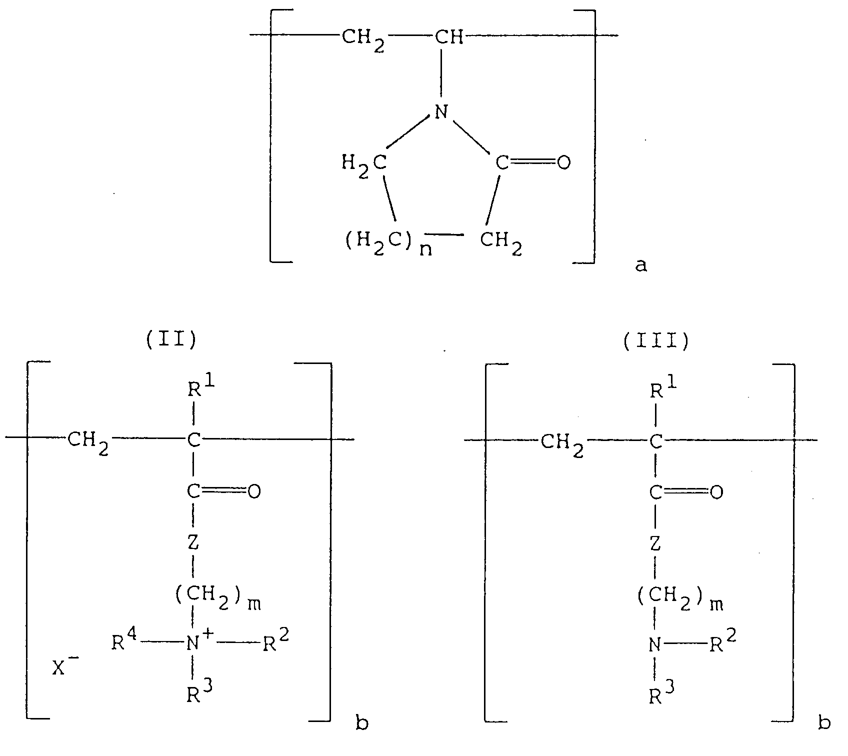 formules dans lesquelles
n = 1, 2 ou 3,
m = 2, 3, 4, 5 ou 6,
a va de 20 à 80 % en moles,
b va de 80 à 20 % en moles et
a + b = 100 % en moles,
R¹ représente H ou un radical alkyle en C₁-C₆,
R² et R⁴ représentent des radicaux alkyle en C₁-C₆ identiques ou différents,
Z représente O ou N-R⁵, R⁵ étant H ou un radical alkyle en C₁-C₆, et
X représente Cl⁻, Br⁻, I⁻, F⁻, ½SO₄²⁻, HSO₄⁻, un groupe alkyl(C₁-C₆)-O-SO₂-O⁻, alkyl(C₁-C₆)-SO₂-O⁻.

2. Pellicule selon la revendication 1, caractérisée en ce qu'elle contient un copolymère de motifs répétitifs de formules I et II et/ou un copolymère de motifs répétitifs de formules I et III, formules dans lesquelles
n = 1,
m = 2, 3 ou 4,
a va de 30 à 70 % en moles,
b va de 70 à 30 % en moles et
a + b = 100 % en moles,
Z représente O ou NH,
X représente HSO₄⁻, un groupe alkyl(C₁-C₆)-O-SO₂-O⁻ ou alkyl(C₁-C₆)-SO₂-O⁻, et
R¹ représente H ou CH₃,
R² et R⁴ sont identiques ou différents et représentent CH₃ ou C₂H₅.

3. Pellicule selon la revendication 1, caractérisée en ce que l'homopolymère ou le copolymère a une masse moléculaire moyenne M_{w} de 50 000 à 2 000 000, de préférence de 100 000 à 1 500 000, de façon particulièrement préférée de 500 000 à 1 500 000.

4. Pellicule plane ou en forme de boyau selon une ou plusieurs des revendications 1 à 3, caractérisée en ce que l'homopolymère et/ou le copolymère est/sont contenu(s) en une proportion de 0,1 à 60 % en poids, de préférence de 0,5 à 30 % en poids, de façon particulièrement préférée de 0,5 à 5 % en poids, dans chaque cas par rapport au poids de la cellulose.

5. Pellicule selon une ou plusieurs des revendications 1 à 4, caractérisée en ce que la pellicule à base d'hydrate de cellulose contient en outre de l'acide alginique et/ou un alginate.

6. Pellicule selon une ou plusieurs des revendications 1 à 5, caractérisée en ce que la pellicule à base d'hydrate de cellulose contient de l'acide alginique et/ou un alginate en une proportion de 1 à 50 % en poids, par rapport au poids de la cellulose.

7. Pellicule selon une ou plusieurs des revendications 1 à 6, caractérisée en ce que la pellicule à base d'hydrate de cellulose contient un renfort fibreux.

8. Pellicule selon une ou plusieurs des revendications 1 à 7, caractérisée en ce que la pellicule à base d'hydrate de cellulose a un taux d'humidité de 10 à 30 % en poids, par rapport au poids de la cellulose.

9. Pellicule selon une ou plusieurs des revendication 1 à 8, caractérisée en ce que la pellicule à base d'hydrate de cellulose présente une perméation de plus de 70 l/m².j.

10. Procédé pour la fabrication d'une pellicule selon une ou plusieurs des revendications 1 à 9, caractérisée en ce que, avant l'extrusion, on ajoute à une solution de viscose une solution aqueuse des homopolymères et/ou copolymères mentionnés dans la revendication 1, la solution homogène résultante est extrudée, coagulée par le liquide acide de précipitation et régénérée.

11. Utilisation de la pellicule selon une ou plusieurs des revendications 1 à 10, en tant que matériau de conditionnement, de préférence pour produits alimentaires, de façon particulièrement préférée pour saucisses.
